# EUROPÄISCHE PATENTSCHRIFT

(11) **EP 3 507 150 B1**
(45) Veröffentlichungstag und Bekanntmachung des Hinweises auf die Patenterteilung: **13.10.2021**
(21) Anmeldenummer: 17746109.2
(22) Anmeldetag: 01.08.2017
(51) Int. Cl.: B60T 13/68, B60T 8/42

(54) **VERFAHREN ZUM BETREIBEN EINES FAHRZEUGBREMSSYSTEMS**
METHOD FOR OPERATING A VEHICLE BRAKE SYSTEM
PROCÉDÉ PERMETTANT DE FAIRE FONCTIONNER UN SYSTÈME DE FREINAGE DE VÉHICULE

(30) Priorität: 01.09.2016 DE 102016216542
(43) Veröffentlichungstag der Anmeldung: 10.07.2019
(73) Patentinhaber: Continental Teves AG & Co. OHG, 60488 Frankfurt am Main (DE)
(72) Erfinder: NEU, Andreas, 76773 Kuhardt (DE); HITZEL, Michael, 63322 Rödermark (DE); JUNG, Michael, 65551 Limburg (DE); SCHELLER, Tobias, 36145 Hofbieber (DE)
(74) Vertreter: Continental Corporation
(86) Internationale Anmeldenummer: PCT/EP2017/069411
(87) Internationale Veröffentlichungsnummer: WO 2018/041503

(56) Entgegenhaltungen:
- DE-A1-102014 212 986
- US-A- 5 882 090
- US-A- 5 927 824
- US-A1- 2015 307 072

## Beschreibung

Die Erfindung betrifft ein Verfahren zum Betreiben eines Fahrzeugbremssystems gemäß dem Oberbegriff des Patentanspruchs 1.

Moderne Fahrzeuge sind in der Regel mit elektronisch geregelten Bremssystemen ausgestattet, welche Funktionen wie eine Bremsschlupfregelung (ABS), die das Blockieren der Räder während einer Bremsung verhindert, Bremsassistent (HBA), welcher bei Erkennung einer Gefahrensituation einen schnellen Druckaufbau bereitstellt, bis die Bremsschlupfregelung eingreift, Fading Brake Support (FBS), welcher einen zusätzlichen Bremsdruckaufbau über eine Rückförderpumpe bei einem Bremskraftverlust erzeugt, und eine Fahrdynamikregelung (ESC) bereitstellen.

Notbremsfunktionen werden bspw. mit einem Bremsassistenten und oder einem FBS-System realisiert, welche bei Erkennung einer Gefahrensituation einen schnellen Druckaufbau bereitstellen, bis eine Bremsschlupfregelung eingreift. Bei diesen Funktionen wird im Rahmen eines Regel- oder eines autonomen Bremseingriffs durch individuelles Schalten von Einlassund/oder Auslassventilen der Hydraulikdruck in den Radbremsen geregelt.

Ein solches bspw. aus der DE 10 2004 011 518 A1 bekanntes hydraulisches Bremssystem eines Fahrzeugs umfasst gemäß Figur 1 einen ersten Bremskreis 1.1 und einen zweiten Bremskreis 1.2 sowie ein Bremsensteuergerät 20, welches auf der Basis von Sensorsignalen E als Eingangssignale Steuersignale für die Ventile der beiden Bremskreise 1.1 und 1.2 als Ausgangssignale A erzeugt.

Der ersten Bremskreis 1.1 für ein vorderes linkes Rad 2.1 (FL) und ein hinteres rechtes Rad 2.1 (RR) ist über ein Trennventil 7.1 mit einem als Tandem-Bremszylinder (THZ) ausgeführten Hauptbremszylinder 5 verbunden. Der zweite Bremskreis 1.2 für ein vorderes rechtes Rad 2.2 (FR) und ein hinteres linkes Rad 2.2 (RL) ist über ein Trennventil 7.2 ebenso mit dem Hauptbremszylinder 5 verbunden.

An den ersten Bremskreis 1.1 bzw. zweiten Bremskreis 1.2 sind Radbremsen 2.11 bzw. 2.21 der Räder 2.1 bzw. 2.2 jeweils über eine Hydraulikleitung angeschlossen.

Das Bremssystem 1 weist einen mit dem Hauptbremszylinder 5 verbundenen Bremskraftverstärker 5.1 und einen Vorratsbehälter 5.2 für die Bremsflüssigkeit bzw. die Hydraulikflüssigkeit als Druckmittel auf. Der Hauptbremszylinder 5 erzeugt auslassseitig einen Bremsdruck P als Vordruck entsprechend eines mit dem Bremskraftverstärker 5.1 verbundenen Bremspedals 6, das von einem Fahrer betätigt wird. Dieser Vordruck p wird über die geöffneten Trennventile 7.1 und 7.2 den offenen Einlassventilen 8.10 und 8.11 des ersten Bremskreises 1.1 und den offenen Einlassventilen 8.20 und 8.21 des zweiten Bremskreises 1.2 einlassseitig zugeführt, damit sich ein entsprechender hydraulischer Bremsdruck an den Radbremsen 2.11 und 2.21 der Räder 2.1 und 2.2 aufbauen kann. Die Einlassventile 8.10 und 8.11 sowie 8.20 und 8.21 sind stromlos offen.

Stromlos geschlossene Auslassventile 9.10 und 9.11 des ersten Bremskreises 1.1 verbindet die Radbremsen 2.11 mit einem Niederdruckspeicher 11.1, der seinerseits mit einer Hydraulikpumpe 3.1 als Druckquelle ansaugseitig verbunden ist und über ein Umschaltventil 10.1 mit dem Hauptbremszylinder 5 verbunden werden kann. Entsprechend verbinden stromlos geschlossene Auslassventile 9.20 und 9.21 des zweiten Bremskreises 1.2 die Radbremsen 2.21 mit einem Niederdruckspeicher 11.2, der seinerseits mit einer Hydraulikpumpe 3.2 als Druckquelle ansaugseitig verbunden ist und über ein Umschaltventil 10.2 ebenso mit dem Hauptbremszylinder 5 verbunden werden kann.

Bei geschlossenem Trennventil 7.1 oder 7.2 dienen die Hydraulikpumpen 3.1 und 3.2 für den Druckaufbau an den Radbremsen 2.11 und 2.21 durch Ansaugen von Druckmittel aus dem Vorratsbehälter 5.2 während einer ABS- oder ESC-Regelung bei offenem Umschaltventil 10.1 bzw. 10.2. Während einer solchen ABS- oder ESC-Regelung werden die den Radbremsen 2.11 und 2.21 zugeordneten Einlass- und Auslassventile 8.10 und 9.10, 8.11 und 9.11, 8.20 und 9.20 bzw. 8.21 und 9.21 als Druckmodulationseinheiten in der einem Fachmann bekannter Weise wechselweise von dem Steuergerät 20 angesteuert. Um das Druckmittel während einer ABS- oder ESC-Regelung aus den Radbremsen 2.11 und 2.21 absaugen zu können, ist das Umschaltventil 10.1 bzw. 10.2 und die Einlassventile 8.10 und 8.11 bzw. 8.20 und 8.21 geschlossen, während die Auslassventile 9.10 und 9.11 bzw. 9.20 und 9.21 geöffnet sind.

Mittels den Hydraulikpumpen 3.1 und 3.2 wird im Falle eines ABS- oder ESC-Eingriffs das bei einem Druckabbau in die Niederdruckspeicher 11.1 und 11.2 verschobene Druckmittel wieder herausgefördert.

Zur Erfassung des Drehverhaltens der Räder 2.1 und 2.2 sind jeweils Drehzahlsensoren S4 vorhanden, die ihre Sensorsignale dem Steuergerät 20 zur Auswertung zuführen, um eine entsprechende Schlupfregelung an den Rädern 2.1 und 2.2 ausführen zu können.

Die Hydraulikpumpen 3.1 und 3.2 werden durch einen Elektromotor 4 angetrieben, der von dem Steuergerät 20 elektrisch steuerbar ist. Dabei wird der Elektromotor 4 derart angesteuert, dass die Hydraulikpumpen 3.1 und 3.2 durch ansaugseitiges Ansaugen von Bremsmittel einen Bremsdruck auf der Hochdruckseite aufbauen können. Dieser von den Hydraulikpumpen 3.1 und 3.2 aufgebaute Bremsdruck wird jeweils von einem in dem ersten Bremskreis 1.1 angeordneten Drucksensor S1 und einem in dem zweiten Bremskreis 1.2 angeordneten weiteren Drucksensor S2 gemessen.

Zur Bestimmung des Volumens an Druckmittel, welches für den Aufbau des von dem Drucksensor S1 oder S2 gemessenen Bremsdruckes von der Hydraulikpumpe 3.1 oder 3.2 gefördert wurde, ist ein Drehzahlsensor S3 des Elektromotors 4 vorgesehen, welcher die dem geförderten Druckmittelvolumen entsprechende Anzahl der Umdrehungen misst.

Bei der Ausführung einer Notbremsfunktion mittels eines Bremsassistenten oder einer EBS-Funktion ist es erforderlich, einen hydraulischen Bremsdruck schnell, also in möglichst kurzer Zeitdauer zu erzeugen, weshalb der die Hydraulikpumpen 3.1 und 3.2 antreibende Elektromotor 4 in bestimmten Situationen einen hohen Strombedarf aufweist und daher das Bordnetz des Fahrzeugs sehr stark belastet wird. Die Belastung des Bordnetzes soll jedoch eine vorgegebene Stromobergrenze nicht überschreiten.

Diese Vorgabe ist besonders dann schwierig zu erfüllen, wenn die Hydraulikpumpen 3.1 und 3.2 in den beiden Bremskreisen 1.1 und 1.2 gegen einen hohen Druck das Druckmittel fördern müssen. Solche Situationen treten bspw. dann auf, wenn eine Notbremsfunktion, wie Bremsassistent (HBA) oder Fading Brake Support (FBS) zusammen mit einer Bremsschlupfregelung (ABS) aktiv sind. Hierbei sind folgende Situationen zu unterscheiden:
- Die Entleerung des Niederdruckspeichers 11.1 bzw. 11.2 bei geschlossenem Umschaltventil 10.1 bzw. 10.2 über das Trennventil 7.1 bzw. 7.2. Hierbei kann die Situation auftreten, dass beide Hydraulikpumpen 3.1 und 3.2 gleichzeitig den Inhalt der beiden Niederdruckspeicher 11.1 und 11.2 hinter die Trennventile 7.1 und 7.2 in den Vorratsbehälter 5.2 fördern müssen, wobei hierzu die Trennventile 7.1 und 7.2 geöffnet und auf diesem Wege das Bremsmittelvolumen gegen die Summe von Differenzdruck an den Trennventilen 7.1 und 7.2 und dem von dem Fahrer mittels des Bremspedals 6 erzeugten Bremsdruck gepumpt wird.
- Bei geöffnetem Umschaltventil 10.1 bzw. 10.2 fördert die Hydraulikpumpe 3.1 bzw. 3.2 ein Volumen an Druckmittel aus dem Vorratsbehälter 5, um bei teilaktiviertem, d. h. geregelten Trennventil 7.1 bzw. 7.2 einen Vordruck aktiv zwischen dem Trennventil 7.1 bzw. 7.2, der Hydraulikpumpe 3.1 bzw. 3.2 und den Einlassventilen 8.10 und 8.11 bzw. 8.20 und 8.21 zu erzeugen, so dass jederzeit ein ABS-Druckaufbau über die dann teilaktivierten Einlassventile 8.10 und 8.11 bzw. 8.20 und 8.21 ermöglicht wird. In diesem Fall wird das Volumen an Bremsmittel gegen den Differenzdruck am teilaktivierten Trennventil 7.1 bzw. 7.2 gefördert.

Ein Verfahren zum Betreiben eines zweikreisigen hydraulischen Bremssystems gemäß dem Oberbegriff des Anspruchs 1 ist in der DE 10 2014 212 986 A1 angegeben.

Ausgehend von dem oben genannten Problem besteht die Aufgabe der Erfindung darin, ein Verfahren zum Betreiben eines zweikreisigen hydraulischen Bremssystems eines Fahrzeugs anzugeben, mit dem die Motorlast des die Hydraulikpumpen 3.1 und 3.2 antreibenden Elektromotors 4 in allen Betriebssituation des Bremssystems derart beschränkt wird, dass eine vorgegebene Belastungsgrenze des Bordnetzes nicht überschritten wird.

Diese Aufgabe wird gelöst durch ein Verfahren zum Betreiben eines zweikreisigen hydraulischen Bremssystems eines Fahrzeugs mit den Merkmalen des Patentanspruchs 1.

Bei diesem Verfahren zum Betreiben eines zweikreisigen hydraulischen Bremssystems eines Fahrzeugs mit einer ABS-funktion, bei dem jeder Bremskreis jeweils zwei Einlass- und Auslassventile, ein elektrisch ansteuerbares Trennventil, ein elektrisch ansteuerbares Umschaltventil, einen Niederdruckspeicher zur Speicherung von Druckmittel während der Durchführung der ABS-Funktion und eine Hydraulikpumpe zur Rückförderung von Druckmittel aus dem Niederdruckspeicher in einen Hauptbremszylinder des Bremssystems oder den Bremskreis aufweist, wobei die Hydraulikpumpen gemeinsam von einem Elektromotor antreibbar sind, ist erfindungsgemäß vorgesehen, dass bei einer autonomen Druckaufbau-Anforderung zur Erhöhung eines Bremsdruckes in wenigstens einem Radbremszylinder des Bremssystems und einer gleichzeitig aktivierten ABS-Regelung folgende Verfahrensschritte durchgeführt werden:
- Überwachen des Füllungsgrades der Niederdruckspeicher,
- Entleeren desjenigen Niederdruckspeichers mittels der zugehörigen Rückförderpumpe, dessen Füllungsgrad zuerst einen definierten Füllungsgradschwellwert erreicht, indem das Umschaltventil des zugehörigen Bremskreises geschlossen wird, und
- wenn während der Durchführung der Niederdruckspeicherentleerung an dem einen Niederdruckspeicher der Füllungsgrad des weiteren Niederdruckspeichers den Füllungsgradschwellwert erreicht und der Entleerungsgrad einen definierten Entleerungsgradschwellwert unterschreitet oder der Füllungsgrad des weiteren Niederdruckspeichers den Füllungsgradschwellwert k/100-fach überschreitet, wird die Niederdruckspeicherentleerung an dem einen Niederdruckspeicher durch Öffnen des zugehörigen Umschaltventils unterbrochen und eine Niederdruckspeicherentleerung mittels der zugehörigen Hydraulikpumpe am weiteren Niederdruckspeicher durchgeführt, indem das zugehörige Umschaltventil geschlossen wird.

Bei diesem Verfahren erfolgt die Entleerung der beiden Niederdruckspeicher 11.1 und 11.2 niemals gleichzeitig, so wird der Elektromotor 4 immer nur von einer Hydraulikpumpe 3.1 oder 3.2 belastet und dadurch auch die Belastung des Bordnetzes des Fahrzeugs entsprechend beschränkt.

Das erfindungsgemäße Verfahren sieht vor, dass zunächst derjenige Niederdruckspeicher entleert wird, dessen Füllungsgrad einen Füllungsgradschwellwert zur Entleerung erreicht. Falls während dieser Entleerung der Füllungsgrad des anderen Niederdruckspeichers ebenso den Füllungsgradschwellwert zur Entleerung erreicht, wird die Entleerung des ersten Niederdruckspeichers unterbrochen, wenn dessen Entleerungsgrad einen Entleerungsgradschwellwert, bspw. 50 % anzeigt oder der Füllungsgrad des anderen Niederdruckspeichers den Füllungsgradschwellwert k/100-fach, bspw. 50 % überschreitet.

Eine vorteilhafte Ausgestaltung der Erfindung sieht vor, dass zur Rückförderung von Druckmittel in den Hauptbremszylinder mittels des Trennventils des jeweiligen Bremskreises eine Regelung des Überströmdruckes durchgeführt wird, indem das Trennventil auf einen Druckwert gesteuert wird, welcher sich aus der Summe desjenigen Druckwertes, welcher dem größeren der von der Druckaufbau-Anforderung vorgegebenen Soll-Druckwerte eines Bremskreises entspricht, und einem Überströmoffset-Wert ergibt.

Damit wird die Trennventilaktivierung auf ein sinnvolles Minimum entsprechend dem größeren Sollwert der beiden Bremsen im jeweiligen hydraulischen Bremskreis zuzüglich eines Überströmoffsets, bspw. 30 bar, reduziert, um Effekte am durchströmten Trennventile auszugleichen und die bestmöglichste Druckstellung zu erreichen.

Bei einer weiteren bevorzugten Weiterbildung der Erfindung wird bei der Erzeugung von niedrigen Überströmdrücken durch die Hydraulikpumpen der Elektromotor mit hohen Drehzahlen angetrieben. So wird der Elektromotor im wenig belasteten Zustand mit höherer Drehzahl betrieben, sodass dadurch kinetische Energie gespeichert wird, die bei Bedarf, insbesondere für die Erzeugung von hohen Bremsdrücken abgerufen werden kann.

Das erfindungsgemäße Verfahren wird nachfolgend anhand eines Ausführungsbeispiels unter Bezugnahme auf die beigefügten Figuren beschrieben. Es zeigen:
- Figur 1: eine schematische Darstellung eines hydraulischen Bremssystems zur Erläuterung eines Ausführungsbeispiels des erfindungsgemäßen Verfahrens, und
- Figur 2: ein Ablaufdiagramm eines Ausführungsbeispieles des erfindungsgemäßen Verfahrens.

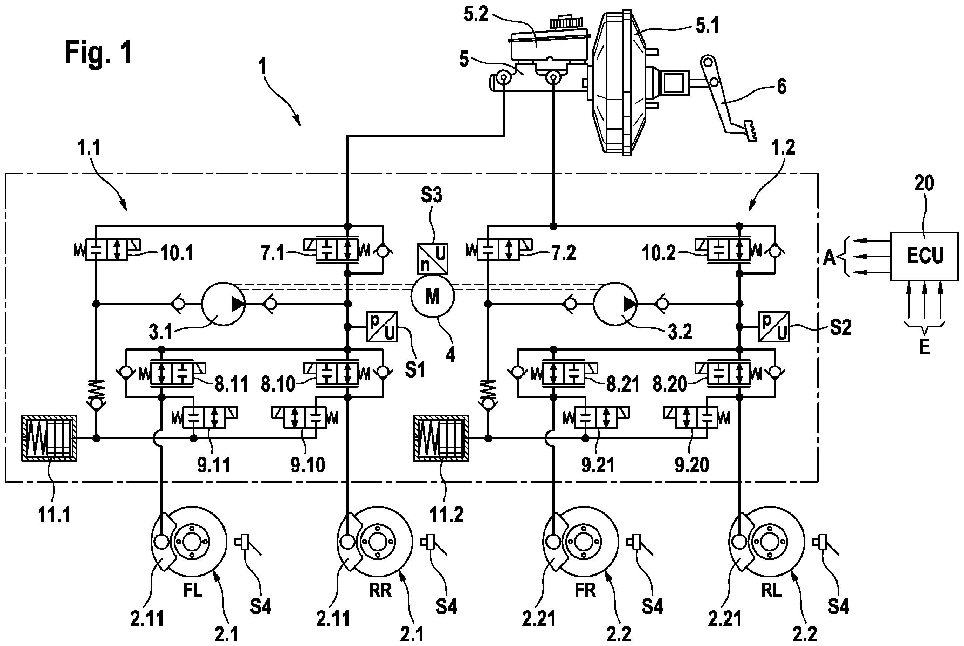

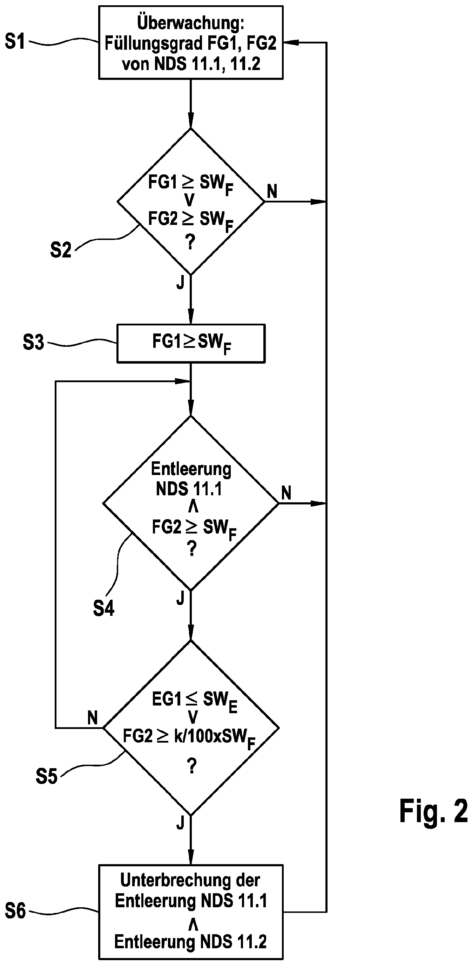

Das zur Durchführung des Ausführungsbeispieles verwendete hydraulische Bremssystem gemäß Figur 1 weist einen aus dem Stand der Technik bekannten Aufbau auf und ist bereits in der Beschreibungseinleitung ausführlich beschrieben. Zur Erläuterung des Ausführungsbeispieles anhand des Ablaufdiagramms nach Figur 2 wird daher auf Figur 1 Bezug genommen.

Wie eingangs bereits beschrieben, ist es zur Ausführung einer Notbremsfunktion mittels eines Bremsassistenten oder einer EBS-Funktion bei diesem hydraulischen Bremssystem gemäß Figur 1 erforderlich, einen hydraulischen Bremsdruck schnell, also in möglichst kurzer Zeitdauer zu erzeugen, weshalb der die Hydraulikpumpen 3.1 und 3.2 antreibende Elektromotor 4 in bestimmten Situationen einen hohen Strombedarf aufweist und daher das Bordnetz des Fahrzeugs sehr stark belastet wird. Die Belastung des Bordnetzes soll jedoch eine vorgegebene Stromobergrenze nicht überschreiten.

Mit dem Ausführungsbeispiel des erfindungsgemäßen Verfahrens wird die Motorlast des die Hydraulikpumpen 3.1 und 3.2 antreibenden Elektromotors 4 in allen Betriebssituation des Bremssystems derart beschränkt, dass eine vorgegebene Belastungsgrenze des Bordnetzes nicht überschritten wird. Dies wird dadurch erreicht, dass die beiden Niederdruckspeicher 11.1 und 11.2 der beiden Bremskreise 1.1 und 1.2 niemals gleichzeitig entleert werden und daher der Elektromotor 4 immer nur von einer Hydraulikpumpe 3.1 oder 3.2 belastet wird. Die geringere Belastung des Elektromotors 4 führt damit auch zu einer geringen Belastung des Bordnetzes des Fahrzeugs.

Das Ausführungsbeispiel wird nun anhand des Ablaufdiagramms nach Figur 2 ausführlich beschrieben und erläutert.

Während des Betriebes des hydraulischen Bremssystems 1, insbesondere bei einer autonomen Druckaufbau-Anforderung zur Erhöhung eines Bremsdruckes in wenigstens einem Radbremszylinder des Bremssystems 1 und einer gleichzeitig aktivierten ABS-Regelung werden folgende Verfahrensschritte durchgeführt: Gemäß einem ersten Verfahrensschritt S1 werden der Füllungsgrad FG1 und FG2 des Niederdruckspeichers (NDS) 11.1 des ersten Bremskreises 1.1 und der Füllungsgrad FG2 des Niederdruckspeichers (NDS) 11.2 des zweiten Bremskreises 1.2 überwacht. Der Füllungsgrad FG1 bzw. FG2 kann mittels eines Sensors gemessen oder durch Bildung eines Volumenmodells näherungsweise ermittelt werden.

Nach einem Verfahrensschritt S2 wird geprüft, welcher der beiden Niederdruckspeicher 11.1 oder 11.2 einen Füllungsgrad FG1 bzw. FG2 aufweist, der größer ist als ein Füllungsgradschwellwert SW_{F}, ob also FG1 ≥ SW_{F} oder FG2 ≥ SW_{F} gilt.

Mit einem Verfahrensschritt S3 wird detektiert, dass der Niederdruckspeicher 11.1 seinen Füllungsgradschwellwert SW_{F} zur Entleerung erreicht, es gilt also FG1 ≥ SW_{F}. Der Niederdruckspeicher 11.1 wird entleert, indem das Umschaltventil 10.1 geschlossen wird.

Mit einem nachfolgenden Verfahrensschritt S4 wird geprüft, ob während der Entleerung des Niederdruckspeichers (NDS) 11.1 auch der andere Niederdruckspeicher (NDS) 11.2 einen Füllungsgrad FG2 erreicht, der größer ist als der Füllungsgradschwellwert SW_{F}, ob also gilt FG2 ≥ SW_{F}. Falls dies nicht zutrifft erfolgt ein Rücksprung auf Verfahrensschritt S1.

Zutreffendenfalls wird in einem weiteren Verfahrensschritt S5 geprüft, ob die Entleerung des Niederdruckspeichers 11.1 zu einem Entleerungsgrad EG1 geführt hat, der kleiner ist als ein Entleerungsgradschwellwert SW_{E}, bspw. 50%, ob also EG1 ≤ SW_{E} gilt, oder der Füllungsgrad FG2 des anderen Niederdruckspeichers 11.2 den Füllungsgradschwellwert SW_{F} um mehr als k%, bspw. 50% überschritten hat, ob also FG2 ≥ k/100 × SW_{F} gilt. Trifft dies zu, wird gemäß einem Verfahrensschritt S6 die Entleerung des Niederdruckspeichers (NDS) 11.1 unterbrochen, d.h. das Umschaltventil 10.1 geöffnet und die Entleerung des anderen Niederdruckspeichers (NDS) 11.2 mittels der Hydraulikpumpe 3.2 begonnen, indem das Umschaltventil 10.2 geschlossen wird. Anschließend erfolgt ein Rücksprung auf Verfahrensschritt S1.

Eine weitere Maßnahme zur Reduzierung der Motorlast des Elektromotors 4 durch die Hydraulikpumpe 3.1 und 3.2 besteht darin, dass zur Rückförderung von Druckmittel in den Hauptbremszylinder 5 mittels des Trennventils 7.1 bzw. 7.2 des jeweiligen Bremskreises 1.1 oder 1.2 eine Regelung des Überströmdruckes durchgeführt wird, indem das Trennventil 7.1 oder 7.2 auf einen Druckwert gesteuert wird, welcher sich aus der Summe desjenigen Druckwertes, welcher dem größeren der von der Druckaufbau-Anforderung vorgegebenen Soll-Druckwerte des Bremskreises 1.1 oder 1.2 entspricht, und einem Überströmoffset-Wert, bspw. von 30 bar ergibt.

Damit wird die Trennventilaktivierung des Trennventils 10.1 oder 10.2 auf ein sinnvolles Minimum entsprechend dem größeren Sollwert der beiden Bremsen im jeweiligen hydraulischen Bremskreis 1.1 oder 1.2 zuzüglich eines Überströmoffsets, bspw. 30 bar, reduziert, um Effekte am durchströmten Trennventile 10.1 oder 10.2 auszugleichen und die bestmöglichste Druckstellung zu erreichen.

Eine weitere Reduzierung der Motorlast des Elektromotors 4 wird dadurch erreicht, dass bei der Erzeugung von niedrigen Überströmdrücken durch die Hydraulikpumpen 3.1 und/oder 3.2 der Elektromotor 4 mit hohen Drehzahlen angetrieben wird. Dies führt dazu, dass durch den Betrieb des Elektromotors mit hohen Drehzahlen bei geringer Belastung kinetische Energie gespeichert wird, die bei Bedarf für die Erzeugung von hohen Bremsdrücken abgerufen werden kann.

### Bezugszeichen

- 1: Bremssystem
- 1.1: erster Bremskreis des Bremssystems 1
- 1.2: zweiter Bremskreis des Bremssystems 1

- 2.1: linkes vorderes Rad FL, rechtes hinteres Rad RR
- 2.11: Radbremse des ersten Bremskreises 1.1
- 2.2: rechtes vorderes Rad FR, linkes hinteres Rad RL
- 2.21: Radbremse des zweiten Bremskreises 1.2

- 3.1: Hydraulikpumpe des ersten Bremskreises 1.1
- 3.2: Hydraulikpumpe des zweiten Bremskreises 1.2

- 4: Elektromotor

- 5: Hauptbremszylinder
- 5.1: Bremskraftverstärker
- 5.2: Vorratsbehälter für Druckmittel

- 6: Bremspedal

- 7.1: Trennventil des ersten Bremskreises 1.1
- 7.2: Trennventil des zweiten Bremskreises 1.2

- 8.10: Einlassventil des ersten Bremskreises 1.1
- 8.11: Einlassventil des ersten Bremskreises 1.1
- 8.20: Einlassventil des zweiten Bremskreises 1.2
- 8.21: Einlassventil des zweiten Bremskreises 1.2

- 9.10: Auslassventil des ersten Bremskreises 1.1
- 9.11: Auslassventil des ersten Bremskreises 1.1
- 9.20: Auslassventil des zweiten Bremskreises 1.2
- 9.21: Auslassventil des zweiten Bremskreises 1.2

- 10.1: Umschaltventil des ersten Bremskreises 1.1
- 10.2: Umschaltventil des zweiten Bremskreises 1.2

- 11.1: Niederdruckspeicher des ersten Bremskreises 1.1
- 11.2: Niederdruckspeicher des zweiten Bremskreises 1.2

- S1: Drucksensor
- S2: Drucksensor
- S3: Drehzahlsensor
- S4: Drehzahlsensor
- S7: Drucksensor

- EG1: Entleerungsgrad des Niederdruckspeichers 11.1
- EG2: Entleerungsgrad des Niederdruckspeichers 11.2

- FG1: Füllungsgrad des Niederdruckspeichers 11.1
- FG2: Füllungsgrad des Niederdruckspeichers 11.2

- SW_{F}: Füllungsgradschwellwert des Füllungsgrades
- SW_{E}: Entleerungsgradschwellwert des Entleerungsgrades

## Patentansprüche

1. Verfahren zum Betreiben eines zweikreisigen hydraulischen Bremssystems (1) eines Fahrzeugs mit einer ABS-Funktion, wobei jeder Bremskreis (1.1, 1.2) jeweils zwei Einlass- und Auslassventile (8.10, 8.11, 8.20, 8.21), ein elektrisch ansteuerbares Trennventil (7.1, 7.2), ein elektrisch ansteuerbares Umschaltventil (10.1, 10.2), einen Niederdruckspeicher (11.1, 11.2) zur Speicherung von Druckmittel während der Durchführung einer ABS-Funktion und eine Hydraulikpumpe (3.1, 3.2) zur Rückförderung von Druckmittel aus dem Niederdruckspeicher (11.1, 11.2) in einen Hauptbremszylinder (5) des Bremssystems (1) oder den Bremskreis (1.1, 1.2) aufweist, wobei die Hydraulikpumpen (3.1, 3.2) gemeinsam von einem Elektromotor (4) antreibbar sind,
**dadurch gekennzeichnet, dass** bei einer autonomen Druckaufbau-Anforderung zur Erhöhung eines Bremsdruckes in wenigstens einem Radbremszylinder des Bremssystems (1) und einer gleichzeitig aktivierten ABS-Regelung folgende Verfahrensschritte durchgeführt werden:
- Überwachen des Füllungsgrades (FG1, FG2) der Niederdruckspeicher (11.1, 11.2),
- Entleeren desjenigen Niederdruckspeichers (11.1) mittels der zugehörigen Hydraulikpumpe (3.1), dessen Füllungsgrad (FG1) zuerst einen definierten Füllungsgradschwellwert (SW_{F}) erreicht, indem das Umschaltventil (10.1) des zugehörigen Bremskreises (1.1) geschlossen wird, und
- wenn während der Durchführung der Niederdruckspeicherentleerung an dem einen Niederdruckspeicher (11.1) der Füllungsgrad (FG2) des weiteren Niederdruckspeichers (11.2) den Füllungsgradschwellwert (SW_{F}) erreicht und der Entleerungsgrad (EG1) des einen Niederdruckspeichers (11.1) einen definierten Entleerungsgradschwellwert (SW_{E}) unterschreitet oder der Füllungsgrad (FG2) des weiteren Niederdruckspeichers (11.2) den Füllungsgradschwellwert (SW_{F}) k/100-fach überschreitet, wird die Niederdruckspeicherentleerung an dem einen Niederdruckspeicher (11.1) durch Öffnen des zugehörigen Umschaltventils (10.1) unterbrochen und eine Niederdruckspeicherentleerung mittels der zugehörigen Rückförderpumpe (3.2) am weiteren Niederdruckspeicher (11.2) durchgeführt, indem das zugehörige Umschaltventil (10.2) geschlossen wird.

2. Verfahren nach Anspruch 1, **dadurch gekennzeichnet, dass** zur Rückförderung von Druckmittel in den Hauptbremszylinder (5) mittels des Trennventils (7.1, 7.2) des jeweiligen Bremskreises (1.1, 1.2) eine Regelung des Überströmdruckes durchgeführt wird, indem das Trennventil (7.1, 7.2) auf einen Druckwert gesteuert wird, welcher sich aus der Summe desjenigen Druckwertes, welcher dem größeren der von der Druckaufbau-Anforderung vorgegebenen Soll-Druckwerte eines Bremskreises (1.1, 1.2) entspricht, und einem Überströmoffset-Wert ergibt.

3. Verfahren nach Anspruch 1 oder 2, **dadurch gekennzeichnet, dass** bei der Erzeugung von niedrigen Überströmdrücken durch die Hydraulikpumpen (3.1, 3.2) der Elektromotor (4) mit hohen Drehzahlen angetrieben wird.

## Claims

1. Method for operating a dual-circuit hydraulic brake system (1) of a vehicle having an ABS function, wherein each brake circuit (1.1, 1.2) has in each case two inlet valves and two outlet valves (8.10, 8.11, 8.20, 8.21), an electrically actuated block valve (7.1, 7.2), an electrically actuated changeover valve (10.1, 10.2), a low-pressure reservoir (11.1, 11.2) for storing pressure medium while an ABS function is being carried out, and a hydraulic pump (3.1, 3.2) for feeding back pressure medium from the low-pressure reservoir (11.1, 11.2) into a master brake cylinder (5) of the brake system (1), or the brake circuit (1.1, 1.2), wherein the hydraulic pumps (3.1, 3.2) can be driven jointly by an electric motor (4),
**characterized in that** when there is an autonomous pressure buildup request to increase a brake pressure in at least one wheel brake cylinder of the brake system (1) and an ABS control system is simultaneously activated, the following method steps are carried out:
- monitoring the degree of filling (FG1, FG2) of the low-pressure reservoirs (11.1, 11.2),
- emptying, by means of the associated hydraulic pump (3.1), that low-pressure reservoir (11.1) whose degree of filling (FG1) first reaches a defined threshold value (SW_{F}) of the degree of filling, by closing the changeover valve (10.1) of the associated brake circuit (1.1), and
- if, during the execution of the low-pressure reservoir emptying process at the one low-pressure reservoir (11.1), the degree of filling (FG2) of the other low-pressure reservoir (11.2) reaches the threshold value (SW_{F}) of the degree of filling and the degree of emptying (EG1) of the one low-pressure reservoir (11.1) undershoots a defined threshold value (SW_{E}) of the degree of emptying, or the degree of filling (FG2) of the other low-pressure reservoir (11.2) exceeds the threshold value (SW_{F}) of the degree of filling by k/100, interrupting the low-pressure reservoir emptying process at the one low-pressure reservoir (11.1) by opening the associated changeover valve (10.1), and carrying out a low-pressure reservoir emptying process at the other low-pressure reservoir (11.2) by means of the associated feedback pump (3.2) by closing the associated changeover valve (10.2).

2. Method according to Claim 1, **characterized in that** in order to feed back pressure medium into the master brake cylinder (5) by means of the block valve (7.1, 7.2) of the respective brake circuit (1.1, 1.2), the overflow-pressure is regulated by adjusting the block valve (7.1, 7.2) to a pressure value which results from the sum of that pressure value which corresponds to the greater of the setpoint pressure values of a brake circuit (1.1, 1.2) which are predefined by the pressure buildup request, and from an overflow offset value.

3. Method according to Claim 1 or 2, **characterized in that** when low overflow-pressures are generated by the hydraulic pumps (3.1, 3.2), the electric motor (4) is driven at high rotational speeds.

## Revendications

1. Procédé permettant de faire fonctionner un système de freinage hydraulique à double circuit (1) d'un véhicule doté d'une fonction ABS, chaque circuit de freinage (1.1, 1.2) présentant respectivement deux soupapes d'entrée et de sortie (8.10, 8.11, 8.20, 8.21), une soupape de séparation à pilotage électrique (7.1, 7.2), une soupape d'inversion à pilotage électrique (10.1, 10.2), un réservoir basse pression (11.1, 11.2) pour stocker un milieu sous pression pendant l'exécution d'une fonction ABS et une pompe hydraulique (3.1, 3.2) pour le refoulement du milieu sous pression hors du réservoir basse pression (11.1, 11.2) dans un maître-cylindre de frein (5) du système de freinage (1) ou dans le circuit de freinage (1.1, 1.2), les pompes hydrauliques (3.1, 3.2) pouvant être entraînées ensemble par un moteur électrique (4),
**caractérisé en ce que** lors d'une demande de montée en pression autonome pour augmenter une pression de freinage dans au moins un cylindre de frein de roue du système de freinage (1) et d'une régulation ABS activée en même temps, les étapes de procédé suivantes sont exécutées :
- surveiller le degré de remplissage (FG1, FG2) des réservoirs basse pression (11.1, 11.2),
- vider au moyen de la pompe hydraulique associée (3.1) celui des réservoirs basse pression (11.1) dont le degré de remplissage (FG1) atteint en premier une valeur seuil de remplissage définie (SW_{F}) **en ce que** la soupape d'inversion (10.1) du circuit de freinage associé (1.1) est fermée, et
- si pendant l'exécution du vidage de réservoir basse pression sur ledit un réservoir basse pression (11.1) le degré de remplissage (FG2) de l'autre réservoir basse pression (11.2) atteint la valeur seuil de degré de remplissage (SW_{F}) et le degré de vidage (EG1) dudit un réservoir basse pression (11.1) soupasse une valeur seuil de degré de vidage définie (SW_{E}) ou le degré de remplissage (FG2) de l'autre réservoir basse pression (11.2) dépasse k/100 fois la valeur seuil de degré de remplissage (SW_{F}), le vidage de réservoir basse pression sur ledit un réservoir basse pression (11.1) est interrompu par l'ouverture de la soupape d'inversion associée (10.1), et un vidage de réservoir basse pression est exécuté par la pompe de refoulement associée (3.2) sur l'autre réservoir basse pression (11.2) par la fermeture de la soupape d'inversion associée (10.2).

2. Procédé selon la revendication 1, **caractérisé en ce que** pour le refoulement du milieu sous pression dans le maître-cylindre de frein (5), une régulation de la pression de trop-plein est exécutée au moyen de la soupape de séparation (7.1, 7.2) du circuit de freinage respectif (1.1, 1.2) **en ce que** la soupape de séparation (7.1, 7.2) est commandée sur une valeur de pression qui résulte de la somme de celle des valeurs de pression qui correspond à la plus grande des valeurs de pression de consigne prédéfinies par la demande de montée en pression d'un circuit de freinage (1.1., 1.2), et d'une valeur de décalage de trop-plein.

3. Procédé selon la revendication 1 ou 2, **caractérisé en ce que** lors de la génération de pressions de trop-plein basses par les pompes hydrauliques (3.1, 3.2), le moteur électrique (4) est entraîné à des vitesses de rotation élevées.
